(19) Europäisches Patentamt
European Patent Office
Office européen des brevets

(11) EP 1 144 306 B1

(12) # FASCICULE DE BREVET EUROPEEN

(45) Date de publication et mention de la délivrance du brevet:
**23.10.2002 Bulletin 2002/43**

(21) Numéro de dépôt: **99973484.1**

(22) Date de dépôt: **12.11.1999**

(51) Int Cl.$^7$: **C01B 21/16**

(86) Numéro de dépôt international:
**PCT/FR99/02786**

(87) Numéro de publication internationale:
**WO 00/037357 (29.06.2000 Gazette 2000/26)**

(54) **PROCEDE DE FABRICATION D'HYDRAZINE PAR HYDROLYSE D'UNE AZINE**

VERFAHREN ZUR HERSTELLUNG VON HYDRAZIN DURCH HYDROLYSE EINES AZINS

METHOD FOR MAKING A HYDRAZINE BY HYDROLYSING AN AZINE

(84) Etats contractants désignés:
**AT BE CH CY DE DK ES FI FR GB GR IE IT LI LU MC NL PT SE**

(30) Priorité: **22.12.1998 FR 9816257**

(43) Date de publication de la demande:
**17.10.2001 Bulletin 2001/42**

(73) Titulaire: **Atofina**
**92800 Puteaux (FR)**

(72) Inventeurs:
- **BRENGUER, Georges**
**F-65250 La Barthe de Neste (FR)**
- **RICARD, Jean-Philippe**
**F-64000 Pau (FR)**
- **VIDAL, Michel**
**F-65300 Lannemezan (FR)**

(74) Mandataire: **Dang, Doris et al**
**Atofina(DRD/DPI),**
**4/8 cours Michelet**
**92800 Puteaux (FR)**

(56) Documents cités:
**EP-A- 0 431 998**
**FR-A- 2 323 635**
**GB-A- 1 197 743**
**GB-A- 1 488 967**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 144 306 B1

Printed by Jouve, 75001 PARIS (FR)

## Description

La présente invention a pour objet un procédé perfectionné de fabrication d'hydrazine par hydrolyse d'une azine.

La production industrielle de l'hydrazine se fait selon les procédés RASCHIG, BAYER ou ATOCHEM.

Dans le procédé RASCHIG on oxyde l'ammoniac par un hypochlorite pour obtenir une solution diluée d'hydrazine qu'il faut ensuite concentrer par distillation.

Le procédé BAYER est une variante du procédé RASCHIG qui consiste à déplacer un équilibre chimique en piégeant, à l'aide d'acétone, l'hydrazine formée sous forme d'azine $(CH_3)_2C = N—N = C(CH_3)_2$. L'azine est ensuite isolée puis hydrolysée en hydrazine.

Le procédé ATOCHEM consiste à oxyder un mélange d'ammoniac et de méthyléthylcétone par l'eau oxygénée en présence d'un catalyseur pour faire directement l'azine qu'il suffit ensuite d'hydrolyser en hydrazine. Le procédé ATOCHEM est décrit dans de nombreux brevets, par exemple US 3972878, US 3972876, US 3948902 et US 4093656.

L'hydrolyse d'une azine en hydrazine est décrite dans les brevets US 4724133 SCHIRMANN et al., US 4725421 SCHIRMANN et al. et GB 1164460.

Cette hydrolyse s'effectue selon le modèle réactionnel classique, qui permet de passer successivement de l'azine (I) à l'hydrazone (II) correspondante, puis de l'hydrazone (II) à l'hydrazine (111). Par exemple dans le cas de la méthyléthylcétone :

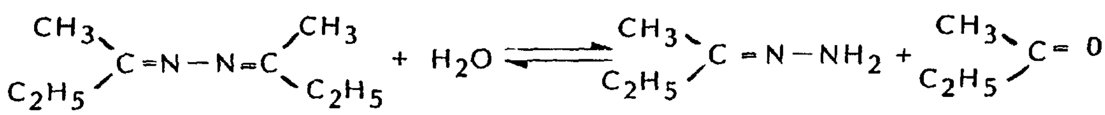

(I) (II)

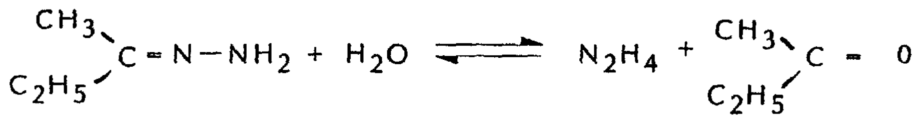

(II) (III)

Ces deux réactions étant équilibrées, l'équilibre étant très fortement déplacé vers la gauche, il est nécessaire de travailler en régime distillatoire pour soutirer les produits de la réaction si l'on veut obtenir de l'hydrazine libre de cétone.

Cette hydrolyse s'effectue donc dans une colonne de distillation de taille suffisante pour que puissent s'installer les deux zones réactionnelles ainsi que les fonctions d'épuisement pour ce qui concerne le pied de la colonne et de concentration pour ce qui concerne la tête de la colonne.

De façon pratique, on alimente la colonne avec de l'azine et de l'eau dans la partie haute. Ces réactions d'hydrolyse ne se déroulent à une vitesse compatible avec le bon fonctionnement d'une installation industrielle, que dans un domaine de température supérieur à 140°C et limité vers le haut à 185 - 190°C en raison de l'instabilité de l'hydrazine à des températures supérieures.

Les deux réactions décrites précédemment sont endothermiques et il est nécessaire d'apporter, au système, à la fois un apport de calories pour le système réactionnel et pour le maintien du régime distillatoire.

Le principe des colonnes à distiller repose sur le fait que généralement, on apporte l'ensemble des besoins énergétiques par le biais d'un rebouilleur placé à la base de la colonne qui peut être chauffé par différents moyens, tels que vapeur surchauffée, huile, fluide thermique, voire chauffage électrique.

La Demanderesse a déjà constaté que si on utilise un rebouilleur à thermosiphon avec un serpentin noyé dans le fond de colonne ou un faisceau tubulaire monté parallèlement au fond de colonne, on observe un phénomène de décomposition de l'hydrazine liée à la température élevée de la paroi métallique.

La Demanderesse a proposé dans le brevet européen n° 0431998 un moyen pratique pour réduire cette décomposition. Il consiste en particulier à fonctionner avec un rebouilleur à circulation forcée et à utiliser comme matériau du rebouilleur soit du titane soit de l'oxyde de chrome.

La Demanderesse a découvert qu'il était possible d'améliorer encore le rendement du procédé en minimisant les pertes d'hydrate d'hydrazine par décomposition, par la mise en oeuvre d'une technique de rebouillage adaptée à la réaction et aux composants.

L'invention a pour objet un procédé de fabrication d'hydrazine par hydrolyse d'une azine réalisée dans une colonne alimentée en tête en azine et en eau, dont on soutire l'hydrazine en fond et la cétone libérée en tête caractérisé en ce que les calories nécessaires aux réactions et à la séparation des divers composants sont apportées pour partie par un rebouilleur et pour partie par l'injection, en au moins un point de la colonne, d'eau vaporisée.

La décomposition de l'hydrazine en pied de colonne a lieu au niveau du rebouilleur et s'effectue selon les réactions suivantes :

$$3N_2H_4 \rightarrow N_2 + 4NH_3 \qquad \text{(I)}$$

$$2N_2H_4 \rightarrow N_2 + 2NH_3 + H_2 \qquad \text{(II)}$$

La réaction (I) représente généralement 95 % de la décomposition.

La solution proposée permet de minimiser largement les pertes en hydrazine en injectant, au sein de la colonne et dans sa partie basse, une partie de l'eau nécessaire à l'hydrolyse de l'azine et cela sous forme d'eau vaporisée, qui apporte également un complément de calories nécessaire à la séparation par distillation. Ceci permet soit d'abaisser le niveau thermique au niveau du rebouilleur, soit d'en diminuer la surface et, dans l'un ou l'autre cas, de diminuer la décomposition de l'hydrazine.

On entend par eau vaporisée de l'eau dont la température est généralement comprise entre 130 et 220°C et la pression relative entre 3 et 18 bar.

L'eau introduite sous forme d'eau vaporisée représente entre 20 et 80 % et de préférence entre 40 et 60 % de l'eau totale.

Cette eau pourra provenir soit d'une alimentation externe, soit d'un recyclage de l'eau de procédé en provenance des autres étapes du procédé global.

Le choix des caractéristiques précises de cette eau vaporisée ainsi que la quantité utilisée dépend naturellement de la réaction mise en oeuvre et des conditions opératoires de la colonne.

L'eau vaporisée est généralement injectée en un seul point, pour des raisons de simplicité, et ce point est de préférence situé en fond de colonne, et avantageusement dans une zone où le rapport des distances "point d'injection - extrémité supérieure de colonne" et "point d'injection - extrémité inférieure de colonne" est supérieur ou égal à 5/1.

Dans une variante du procédé, on pourra avoir deux ou plusieurs points d'injection, l'un d'entre eux, celui fournissant plus de 50/60 % des calories apportées sous cette forme, étant situé au fond de colonne.

L'efficacité du procédé est déterminée par la quantité d'hydrazine formée et décomposée et cela en mesurant au niveau des évents de la colonne la composition analytique de l'effluent : azote, ammoniac, hydrogène. De cette composition, on déduit la décomposition due à la réaction (I), volume d'azote, et à la réaction (II), volume d'hydrogène.

Le procédé de l'invention s'applique à un procédé d'hydrolyse utilisant un rebouillage classique, par apport de calories en fond de colonne. Il est de préférence mis en oeuvre avec la méthode de rebouillage décrite dans le brevet EP 0431998 dans laquelle pour chauffer la solution aqueuse d'hydrazine essentiellement en phase liquide, on met la phase liquide en pression pendant qu'on la chauffe, c'est-à-dire que la solution aqueuse d'hydrazine absorbe l'énergie thermique sous forme d'une augmentation de sa température puis on détend cette solution et l'énergie précédente est restituée sous forme d'une vaporisation, c'est-à-dire que l'on utilise un rebouilleur à circulation forcée.

Le procédé de l'invention s'applique à l'hydrolyse des azines ou des produits homologues tels que l'hydrazone.

On désigne respectivement par azine et hydrazone les produits de formule :

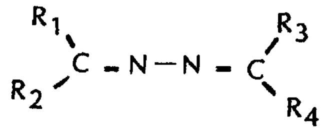

et

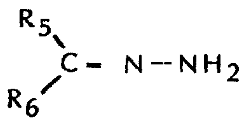

dans lesquels $R_1$ à $R_6$ sont identiques ou différents et désignent de l'hydrogène, un radical alkyl linéaire ayant de 1 à 12 atomes de carbone, un radical alkyl ramifié ou cycloalkyl ayant de 3 à 12 atomes de carbone, un radical aryl ayant de 6 à 12 atomes de carbone. Les radicaux $R_1$ à $R_6$ reliés au même atome de carbone de l'azine ou de l'hydrazone peuvent être eux-mêmes reliés et représenter ensemble un radical alkylène linéaire ou ramifié ayant de 3 à 12 atomes de carbone.

Tous les radicaux $R_1$ à $R_6$ précédents peuvent aussi être substitués par un chlore, un brome, un fluor ou un groupe nitro, hydroxy, alcoxy ou une fonction ester. L'invention est particulièrement utile pour l'acétone azine :

$$CH_3(CH_3)C = N—N = C(CH_3)CH_3$$

la méthyléthylcétazine

$$C_2H_5(CH_3)C = N—N = C(CH_3)C_2H_5$$

et les hydrazones correspondantes.

La figure 1 décrit un dispositif de mise en oeuvre du procédé de l'invention et la figure 2 celui de l'art antérieur.

Dans la figure 1, (1) représente une colonne à distiller dans laquelle on introduit en haut de colonne de l'azine par la conduite (2) et de l'eau par la conduite (4). Une fraction de l'eau amenée par la conduite (3) est envoyée par la conduite (5) à un échangeur (6), puis alimente, sous forme d'eau vaporisée le bas de la colonne (1). L'hydrazine produite est soutirée en bas de colonne par la conduite (7). Une fraction de cette hydrazine est dérivée par la colonne et adressée à une pompe (9) puis à un échangeur (10) avant d'être réinjectée à un niveau thermique plus élevé en bas de colonne (1). En haut de colonne (1) on soutire par la conduite (11) un azéotrope cétone eau et des gaz inertes qui sont séparés après passage dans un échangeur (12). La fraction liquide azéotrope cétone eau est recyclée partiellement par la conduite (14) en haut de colonne (1).

La figure 2 illustre la technique de l'art antérieur dans laquelle l'eau est introduite en haut de colonne (1) par la conduite (3). L'hydrazine formée est soutirée par la conduite (7) et partiellement recyclée dans la colonne (1) par l'intermédiaire de la conduite (8) après passage dans une pompe (9) et un échangeur (10) qui élèvent son niveau thermique.

Le procédé de l'invention sera mieux compris à la lumière des exemples ci-après :

*Exemple 1*

On réalise l'hydrolyse de la Mecazine (Méthyl-éthylazine) dans une colonne à plateaux. L'eau et la mecazine sont injectées en tête de colonne, l'eau vaporisée est injectée en fond de colonne, ainsi que cela est illustré en figure 1. Les conditions opératoires sont les suivantes

- Température en fond 178 - 190°C
- Pression en tête 7,5 à 9,7 bar (relatif)
- Injection eau vaporisée T:180 - 195 °C
- Rebouillage T : 200°C
  P : 16 bar
- Injection d'azine 4 t/h
- Injection d'eau totale 10,4 t/h
- Injection d'eau vaporisée 5 t/h
- Soutirage d'hydrazine 9,1 t/h
  (HHZ exprimé en hydrate d'hydrazine 14,6%-eau 85,4 %)
- Rebouillage
  Débit de recirculation 17,7 t/h
  Consommation de vapeur 330 t/h
- Soutirage cétone (azéotrope) 5 t/h

(cétone 4 t/h ; eau 1 t/h)

- Events azote 12,5 kg/h

La quantité d'hydrazine, exprimée en hydrate d'hydrazine, décomposée mesurée selon la méthode décrite ci-dessus, est de 66,9 kg/heure, soit une perte de 4,8 % de l'hydrazine formée.

*Exemple 2 - Comparatif*

La même réaction est réalisée (voir figure 2) dans une colonne identique, les seules différences étant les suivantes :

- la totalité de l'eau est injectée en tête;
- la quantité de soutirage pour le rebouillage est de 420 t/h et la consommation correspondante de vapeur de 21,1 t/h au lieu de 330 t/h et 17,7 t/h respectivement.

La récupération d'azote au niveau des évents est de 19,4 kg/h au lieu de 12,5 kg/h.
La quantité d'hydrazine, exprimée en hydrate d'hydrazine, décomposée est de 104 Kg/heure soit 7,2 % d'hydrate d'hydrazine formée.
Le procédé de l'invention permet de diminuer la décomposition de l'hydrazine au sein du milieu réactionnel de 33 %.

## Revendications

1. Procédé de fabrication d'hydrazine par hydrolyse d'une azine réalisé dans une colonne alimentée en tête, en azine et en eau, dont on soutire l'hydrazine en fond, et la cétone libérée en tête, **caractérisé en ce que** les calories nécessaires aux réactions et à la séparation des divers composants sont apportées pour partie par un rebouilleur, et pour partie par l'injection, en au moins un point de la colonne, d'eau vaporisée.

2. Procédé selon la revendication 1 **caractérisé en ce que** l'eau vaporisée est injectée en fond de colonne.

3. Procédé selon l'une des revendications 1 et 2 **caractérisé en ce que** la quantité d'eau injectée sous forme d'eau vaporisée représente de 20 à 80 % et, de préférence, de 40 à 60 %, de l'eau totale.

4. Procédé selon l'une des revendications 1 à 3 **caractérisé en ce que** l'eau vaporisée est à une température comprise entre 130 et 220°C et à une pression relative comprise entre 3 et 18 bar.

## Claims

1. Process for manufacturing hydrazine by hydrolysing an azine, which is carried out in a column fed at the top with azine and water, and from which hydrazine is removed at the bottom and the ketone released is removed at the top, **characterized in that** the heat required for the reactions and the separation of the various components is partly supplied by means of a boiling vessel and partly by injection, into at least one point of the column, of vaporized water.

2. Process according to Claim 1, **characterized in that** the vaporized water is injected into the bottom of the column.

3. Process according to either of Claims 1 and 2, **characterized in that** the amount of water injected in the form of vaporized water represents from 20 to 80% and preferably from 40 to 60% of the total water.

4. Process according to one of Claims 1 to 3, **characterized in that** the vaporized water is at a temperature of between 130 and 220°C and at a relative pressure of between 3 and 18 bar.

## Patentansprüche

1. Verfahren zur Herstellung von Hydrazin durch Hydrolyse eines Azins, das in einer Kolonne durchgeführt wird, die

mit dem Azin und Wasser am Kopf gespeist wird, wobei das Hydrazin am Boden und das gebildete Keton am Kopf entnommen wird, **dadurch gekennzeichnet, daß** die für die Reaktionen und für die Trennung der verschiedenen Komponenten erforderliche Wärmeenergie zum Teil über einen Verdampfer und zum Teil durch Injektion von Wasserdampf an zumindest einem Punkt der Kolonne zugeführt wird.

**2.** Verfahren nach Anspruch 1, **dadurch gekennzeichnet, daß** der Wasserdampf am Boden der Kolonne eingespritzt wird.

**3.** Verfahren nach einem der Ansprüche 1 und 2, **dadurch gekennzeichnet, daß** die Menge des in Form von Wasserdampf eingespritzten Wassers 20 bis 80 % und vorzugsweise 40 bis 60 % des gesamten Wassers ausmacht.

**4.** Verfahren nach einem der Ansprüche 1 bis 3, **dadurch gekennzeichnet, daß** der Wasserdampf eine Temperatur von 130 bis 220 °C und einen relativen Druck von 3 bis 18 bar aufweist.

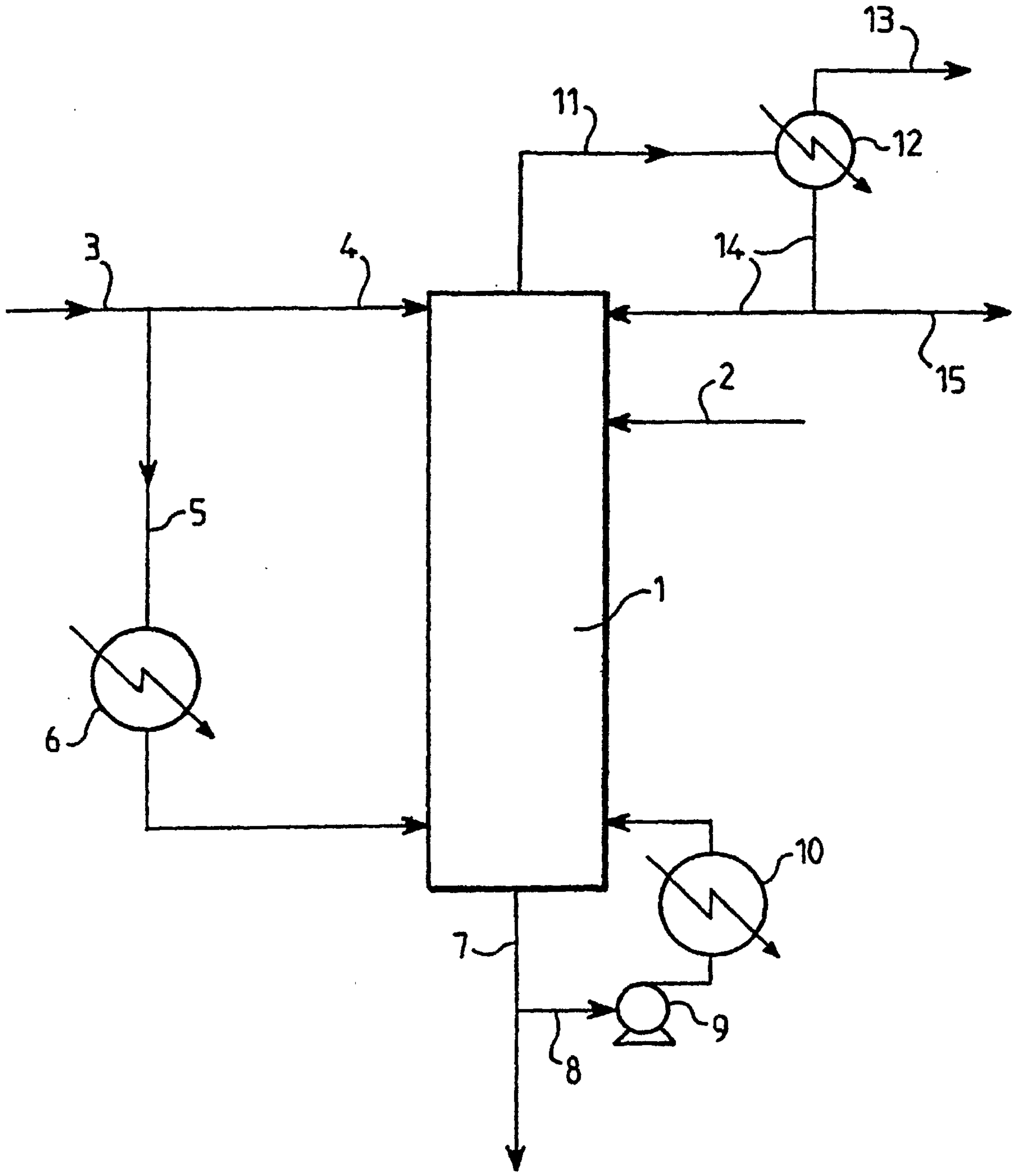


FIG.1

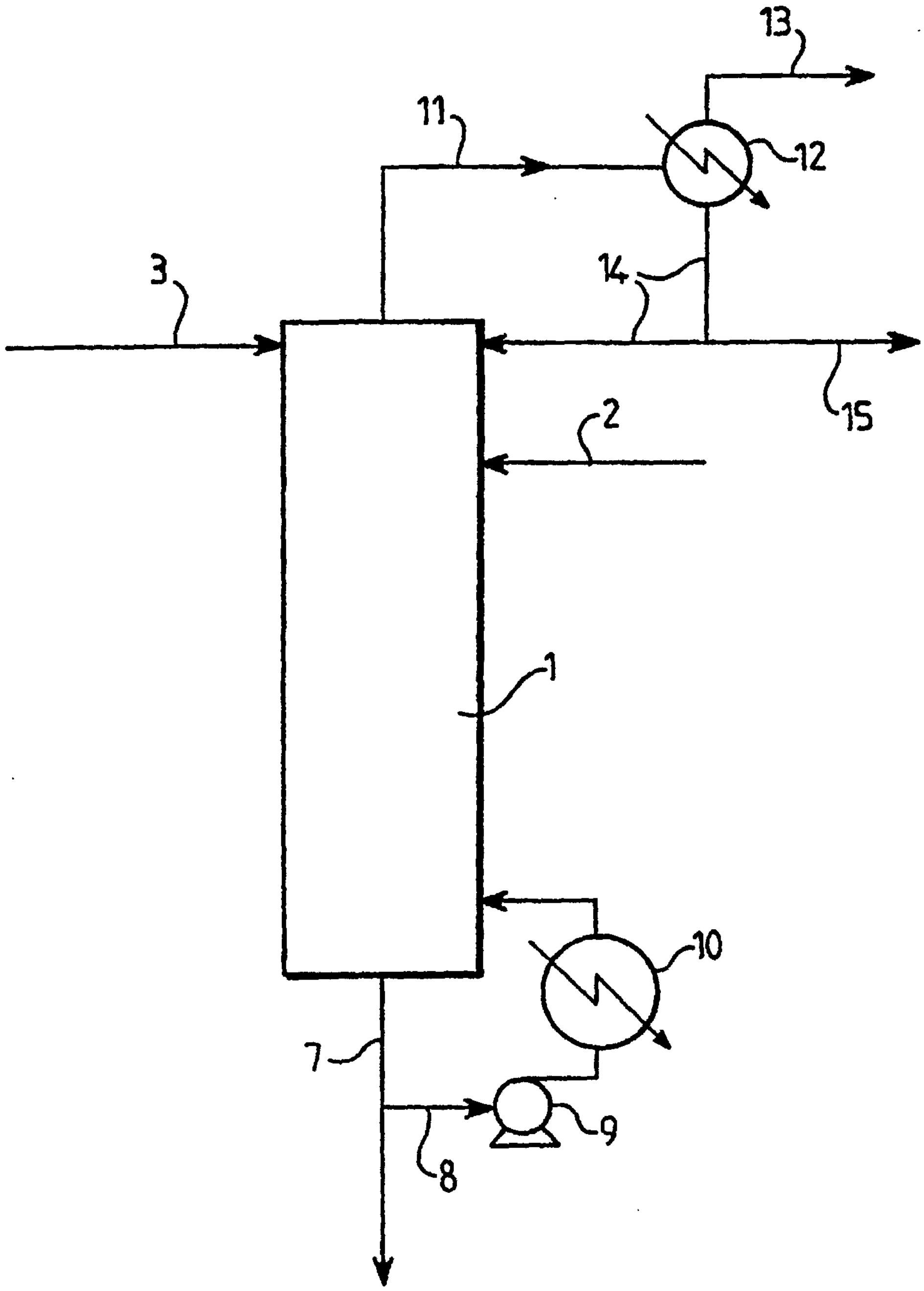


FIG. 2